# EUROPÄISCHE PATENTSCHRIFT

(11) **EP 1 518 465 B1**
(45) Veröffentlichungstag und Bekanntmachung des Hinweises auf die Patenterteilung: **02.11.2011**
(21) Anmeldenummer: 04022279.6
(22) Anmeldetag: 18.09.2004
(51) Int. Cl.: A23L 1/00, A23C 9/154, A23C 13/12, A23C 17/00, A23L 1/187, A23L 1/212

(54) **Gekühltes Fertigdessert und Verfahren zu seiner Herstellung**
Cooled ready-to-eat dessert and its method of preparation
Dessert prêt à consommer refroidi et son procédé de préparation

(30) Priorität: 29.09.2003 DE 10346193
(43) Veröffentlichungstag der Anmeldung: 30.03.2005
(73) Patentinhaber: FrieslandCampina Germany GmbH, 74078 Heilbronn (DE)
(72) Erfinder: Hubinger, Konrad, Dipl.-Ing., 33332 Gütersloh (DE); Humfeld, Martin, Dipl.-Ing, 33334 Gütersloh (DE)
(74) Vertreter: Patentanwälte Ruff, Wilhelm, Beier, Dauster & Partner

(56) Entgegenhaltungen:
- EP-A- 0 853 888
- EP-A- 0 928 560
- WO-A-02/00029
- WO-A-03/082020
- DE-A- 2 001 143
- FR-A- 2 028 704
- US-A1- 2003 039 728
- US-B2- 6 305 275

## Beschreibung

Die Erfindung betrifft ein gekühltes Fertigdessert in einem Becher sowie ein Verfahren zu seiner Herstellung.

Gekühlte Fertigdesserts wie Puddings, Cremes, unterschiedliche Fruchtzubereitungen oder aufgeschäumte Milchprodukte sind derzeit in vielerlei Geschmacksrichtungen und Kombinationen derzeit im Handel weit verbreitet. Bei den derzeit erhältlichen Produkten handelt es sich zumeist um Produkte, welche aus einer einzelnen Dessertkomponente bestehen oder aus Produkten, bei denen einzelne Dessertkomponenten verschiedener Geschmacksrichtungen miteinander kombiniert sind, eine Schlagsahneschicht als abschließende Topping oder eine Fruchtschicht unter dem Joghurt als aromatische Komponente hinzugefügt ist. Die unterschiedlichen Komponenten der derzeit erhältlichen Fertigdesserts sind in der Regel entweder in unterschiedlichen Kammern eines Mehrkammerbechers untergebracht, um kurz vor dem Verzehr miteinander vermischt zu werden oder sie liegen in mehreren horizontalen Schichten, welche nacheinander in den Becher abgefüllt wurden,vor.Aufgrund ihrer sehr unterschiedlichen Konsistenz können die einzelnen Komponenten nicht in beliebiger Reihenfolge abgefüllt werden. So wird bspw. In der Regel die Komponente mit höherer Dichte zuerst abgefüllt und erst anschließend die Komponente mit der geringeren Dichte, um zu verhindern, dass beide Komponenten durchmischt werden.

Bei den derzeit bekannten Fertigdesserts besteht regelmäßig das Problem, dass die beiden Komponenten, welche eigentlich zusammen miteinander verzehrt werden sollten, deutlich separiert voneinander vorliegen und dadurch der Verzehr entweder nacheinander erfolgt oder beide Komponenten vor dem Verzehr durchmischt werden müssen, wodurch die Konsistenz aufgeschäumter Komponenten, wie beispielsweise von Schlagsahne, stark beeinträchtigt wird und durch das Durchmischen von Sahne und Pudding oder Joghurt und einer geschäumten Fruchtzubereitung zumeist eine sehr kompakte und nicht mehr luftige Masse und im Vergleich zum ursprünglichen Aussehen des Produktes unmittelbar nach dem Öffnen der Verpackung eher unansehnliches Produkt verzehrt wird.

In der EP 0 928 560 A2 und der U.S. 6,305,275 B2 sind gekühlte Fertigdessert mit verschieden geformten Komponenten, beispielsweise in Form von aufgeschäumten Milchprodukten, beschrieben, wobei die Komponenten getrennt voneinander vorliegen und gemeinsame Berührungsflächen haben, die von unten nach oben und über die gesamte Becherhöhe von der Bechermitte bis zur Becherwandung verlaufen und die Komponenten von der Bechermitte zum Umfang eine Verbreiterung aufweisen.

Der Erfindung liegt daher die Aufgabe zugrunde, Produkte in Form gekühlter Fertigdesserts bereitzustellen, welche den gleichzeitigen Verzehr unterschiedlicher Komponenten ermöglichen, ohne dass der optische Eindruck und die Konsistenz der beiden Komponenten beeinträchtigt wird.

Diese Aufgabe wird gelöst durch ein gekühltes Fertigdessert in Form eines Milchproduktes in einem Becher mit einem im wesentlichen runden Querschnitt mit mindestens zwei verschiedenen geformten Komponenten, von denen mindestens eine ein Milchprodukt ist, wobei mindestens eine Komponente aufgeschäumt ist und die Komponenten getrennt voneinander vorliegen und gemeinsame Berührungsflächen haben, die von unten nach oben und über die gesamte Becherhöhe von der Bechermitte bis zur Becherwandung verlaufen und die Komponenten von der Bechermitte zum Umfang eine Verbreitung aufweisen.

Der volumenmäßige Anteil der einzelnen Komponenten verändert sich in Abhängigkeit von der Füllhöhe. Diese Änderung des Anteils der einzelnen Komponenten, und damit insbesondere der Breite der jeweiligen Sektoren der Komponente ändert sich gegenläufig von unten nach oben. Vorzugsweise ist diejenige Komponente, welche eine höhere Dichte und insbesondere auch eine geringere Viskosität aufweist, im unteren Bereich breiter als im oberen Bereich. Umgekehrt ist die Breite der Komponente mit geringerer Dichte im oberen Bereich breiter als im unteren Bereich. Dadurch ergibt sich die gegenläufige Breite der unterschiedlichen Komponente in Abhängigkeit von der Füllhöhe des Desserts.

Der Vorteil des erfindungsgemäßen gekühlten Fertigdesserts besteht darin, dass zu jedem Zeitpunkt, d.h. vom Verzehr des ersten bis zum letzten Löffel des Produktes mehrere Komponenten unterschiedlicher Konsistenz und Dichte gleichzeitig verzehrt werden können, ohne dass die Konsistenz und damit das Geschmacksempfinden durch das Vermischen der mindestens zwei Komponenten miteinander beeinträchtigt wird und außerdem zwei unterschiedliche Geschmackskomponenten gleichzeitig verzehrt werden können.

Das erfindungsgemäße Fertigdessert in Form eines Milchproduktes liegt in einem Becher mit einem im wesentlichen runden Querschnitt vor und umfasst mindestens zwei, insbesondere zwei, verschiedene, geformte Komponenten. Mindestens eine dieser Komponenten ist ein Milchprodukt. Ebenfalls mindestens eine der Komponenten des erfindungsgemäßen Fertigdesserts liegt in aufgeschäumter Form vor, wobei die Komponenten jeweils getrennt voneinander vorliegen und über gemeinsame Berührungsflächen verfügen, die von unten nach oben reichen und über die gesamte Füllhöhe des Bechers von der Bechermitte bis zum Umfang verlaufen. Dabei weist mindestens eine Komponente eine Verbreiterung von der Bechermitte zum Umfang hin auf. Die einzelnen Komponenten des gekühlten Fertigdesserts sind mindestens im Abfüllzustand fließfähig. Nach dem Abfüllvorgang kann sich mindestens eine Komponente in Abhängigkeit ihrer Zusammensetzung während des Kühlvorganges nach der Abfüllung verfestigen. Die Komponenten können zum Zeitpunkt des Verzehrs in einer cremeartigen Konsistenz vorliegen. Es ist auch möglich, dass eine Komponente in gallertartiger Konsistenz oder in einer schaumartigen Konsistenz vorliegt. Die einzelnen Komponenten liegen im Fertigdessert mindestens teilweise nebeneinander.

Die einzelnen Komponenten des gekühlten Fertigdesserts unterscheiden sich mindestens in der Viskosität und/oder der Dichte. Es ist auch möglich, dass die einzelnen Komponenten in unterschiedlichem Volumen vorliegen.

Mit Vorteil verlaufen die einzelnen Komponenten am Außenmantel des Bechers wendelförmig von unten nach oben. Dabei kann eine Komponente einen mehr oder weniger großen Winkel durchlaufen. Es ist möglich, dass eine Komponente über die gesamte Füllhöhe lediglich einen relativ geringen Winkel von bis zum 90° durchläuft. In einer anderen Ausführungsform kann eine Komponente über die gesamte Füllhöhe einen Winkel von 180° bis 360° durchlaufen. Die Winkel der Wendel ist abhängig von der Konsistenz der jeweiligen Komponente und der Kombination der unterschiedlichen Komponenten und deren Fließverhalten bzw. Viskositäten untereinander.

Vorteilhafterweise ist die geschäumte Komponente um 20 % bis 164 %, insbesondere 30 % bis 110 %, aufgeschäumt. Dadurch ergibt sich eine Erhöhung ihres Volumens im Verhältnis zum Volumen vor dem Aufschäumen von 1,2 bis ca. 2,6. Der Grad der Aufschäumung hängt von der Art, insbesondere dem sich ändernden Viskositätsverhalten der geschäumten Komponente ab.

Mit Vorteil handelt es sich bei der geschäumten Komponente um ein Milchprodukt, bevorzugt um Sahne. Bei der Sahne kann es sich um eine

Sahne mit einem Fettgehalt von 10% bis 35% handeln. Möglich ist die Verwendung einer Auflegsahne mit ca. 20 % Fett. Es ist weiterhin auch die Verwendung von Schlagsahne mit einem Fettgehalt von ca. 30 % möglich.

Das geschäumte Milchprodukt wird vorzugsweise um 80 % bis 160 % aufgeschäumt. Der Grad der Aufschäumung hängt von der Viskositätsänderung durch das Aufschäumen selbst ab. Die geschäumte Komponente soll durch das Aufschäumen nicht zu fest werden, jedoch muss eine gewisse Mindestviskosität erzielt werden, um eine ausreichende Formstabilität im Fertigdessert zu gewährleisten. Das geschäumten Milchprodukt darf durch das Aufschäumen nicht zu fest werden, damit die Verarbeitbarkeit, insbesondere die Pump- und Fließfähigkeit, erhalten bleibt.

In einer anderen Ausführungsform besteht die geschäumte Komponente aus einer Fruchtzubereitung. Hierbei ist eine Vielzahl von Früchten und Zubereitungen möglich. Mit Vorteil wird eine im Vergleich zur zweiten Komponente kontrastreiche und optisch ansehnliche Fruchtzubereitung, insbesondere eine Erdbeer-, Himbeer-, Heidelbeer- und/oder Pfirsich-Fruchtzubereitung verwendet.

Diese Fruchtzubereitung wird mit Vorteil um 20 % bis 60 % aufgeschäumt, um eine optimale stabilisierte Konsistenz zu erhalten.

Gemäß einer Ausführungsform weist mindestens eine, vorzugsweise eine, Komponente an der Oberfläche eine Wölbung nach außen auf. Vorzugsweise handelt es sich bei der gewölbten Komponente um eine Komponente geringerer Dichte, insbesondere um die geschäumte Komponente. In der einer Ausführungsform bestehend aus Pudding und Sahne weist die aufgeschäumte Sahnekomponente eine Wölbung auf, die vom Grad der Aufschäumung abhängt.

In einer Ausführungsform ist mindestens eine Komponente, insbesondere im Horizontalschnitt durch den Becher mit dem gekühlten Fertigdessert unabhängig von der Füllhöhe sektorenförmig ausgebildet, d.h. ihre Form wird ausgehend im wesentlichen von der Mittelachse zum Becherrand hin immer breiter.

In einer Ausführungsform umfassend die beiden Komponenten Pudding und Schlagsahne und die Breite der Puddingsektoren nimmt von unten nach oben ab und die Breite der Sahnekomponente nimmt von unten nach oben kontinuierlich zu, so dass an der Oberfläche des Fertigdesserts der Anteil der beiden Komponenten Pudding und Schlagsahne gleich ist und den Eindruck erweckt, als bestünde das Produkt aus gleichen Anteilen von Schlagsahne und Pudding.

Zwei oder mehr verschiedene Komponenten liegen vorzugsweise in 4 bis 16, insbesondere in 6 bis 12 und ganz besonders bevorzugt in 10 im wesentlichen radialen, vorzugsweise sektorenartigen Streifen vor. Es ist auch möglich, dass die Komponenten in spiraligen Streifen vorliegen.

In einer Ausführungsform ist der Anteil an der Oberfläche der beiden Komponenten in etwa gleich, so dass ein Eindruck entsteht als bestünde das Dessert aus gleichen Anteilen der beiden Komponenten. In einer anderen Ausführungsform beträgt der Anteil einer Komponente nur einen Bruchteil der zweiten Komponente, so dass das Verhältnis der beiden Komponenten an der Oberfläche zwischen 5:1 und 1:1 liegen kann.

Das Verhältnis der beiden Komponenten an der Oberfläche steht in keinem unmittelbaren Zusammenhang mit dem volumenmäßigen oder gewichtsmäßigen Anteil der beiden Komponenten am gesamten Volumen des Fertigdesserts.

In einer Ausführungsform handelt es sich bei dem Becher des gekühlten Fertigdesserts um einen Papierbecher, so dass nach dem Öffnen des Bechers nur die Oberfläche des Produktes, nicht aber die Seitenflächen des Produktes zu sehen sind.

In einer anderen Ausführungsform handelt es sich um einen durchsichtigen Becher, insbesondere um einen Kunststoffbecher, und das Produkt ist nach dem Öffnen des Bechers von allen Seiten nach außen hin sichtbar.

Weitere Merkmale der Erfindung ergeben sich durch die nachfolgende Beschreibung von bevorzugten Ausführungsformen und Beispielen in Verbindung mit der Zeichnung und den Unteransprüchen. Hierbei können die einzelnen Merkmale der Erfindung alleine oder in Kombination miteinander verwirklicht sein. Die beschriebenen Ausführungsformen dienen zur Erläuterung und zum besseren Verständnis der Erfindung und sind in keiner Weise einschränkend zu verstehen.

### Figurenbeschreibung

Fig. 1 zeigt ein Flussschema für die Abfüllung eines Fertigdesserts 18,
Fig. 2 zeigt eine Ansicht von oben auf ein Fertigdessert 18,
Fig. 3 zeigt eine perspektivische Ansicht auf ein Fertigdessert 18,

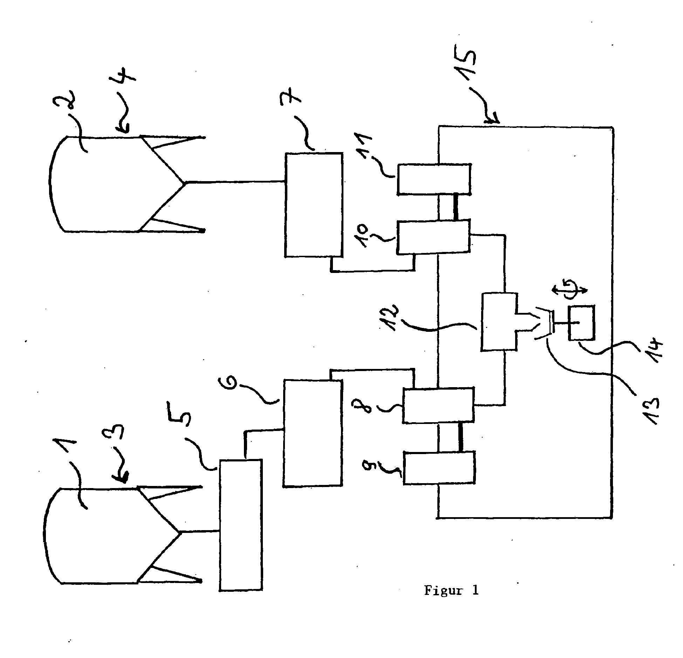

Figur 1 zeigt ein Flussschema für die Abfüllung eines Fertigdesserts 18 umfassend eine aufzuschäumende Komponente 1, die sich in einem Vorratsbehälter 3 befindet sowie eine ungeschäumte Komponente 2, die sich in einem Vorratsbehälter 4 befindet. Die aufzuschäumende Komponente wird über eine Aufschlagmaschine 5 aufgeschäumt und in den Vorlaufbehälter 6 für die geschäumte Komponente kontinuierlich gefüllt. Die ungeschäumte Komponente 2 wird ebenfalls zeitgleich aus dem Vorratsbehälter 4 in einen weiteren Vorlaufbehälter 7 gepumpt. Für den eigentlichen Füllvorgang der Abfüllmaschine 15 sind mehrere, voneinander unabhängige Servomotoren vorgesehen, um die Phasenverschiebung ϕ zu gewährleisten. Mit dem Füllbeginn öffnet zunächst das Ventil 8 der geschäumten Komponente und die Pumpe 9 der geschäumten Komponente startet. Phasenverschoben ϕ öffnet das Ventil 10 der ungeschäumten Komponente sowie die Abfülldüse 12 und die Pumpe 11 der ungeschäumten Komponente startet. Zeitgleich wird der Becheranheber 14 abwärts bewegt und eventuell gedreht (je nach Ausführungsform) und der Becher 13 kontinuierlich mit dem Fertigdessert befüllt. Dieser Ablauf wiederholt sich mit jedem Füllvorgang.

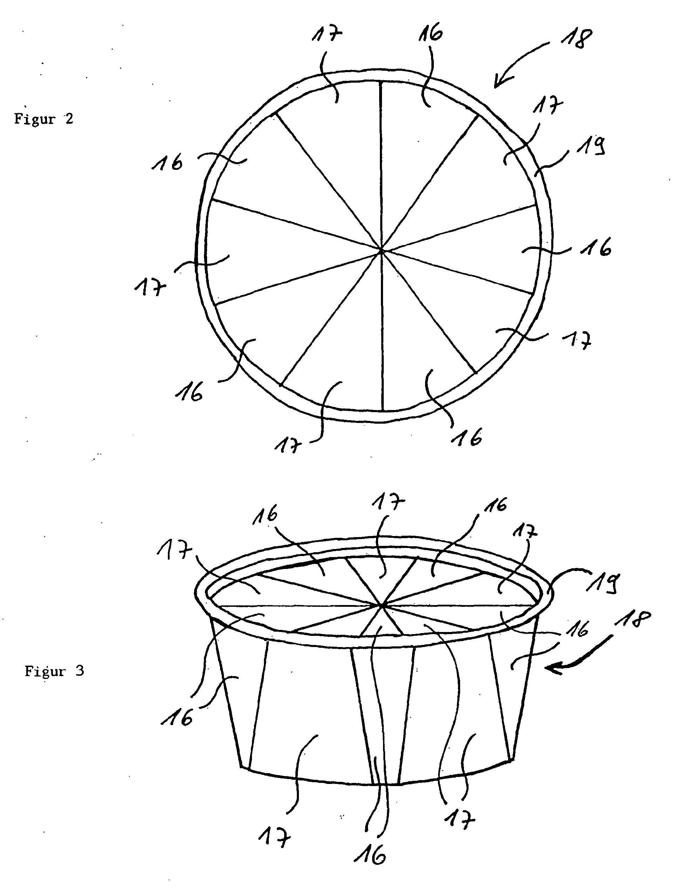

Figur 2 zeigt eine Aufsicht auf einen geöffneten Becher 18 mit einem Siegelrand 19, gefüllt mit einem Fertigdessert aus den Komponenten A und B. Hierbei sind die zwei verschiedenen Komponenten 16, 17 ausgehend von der Mittelachse sektorenförmig abwechselnd nebeneinander angeordnet.

Figur 3 zeigt eine perspektivische Ansicht auf einen Becher mit einem Fertigdessert 18 mit dem oberen Siegelrand des Bechers 19. Hierbei sind die zwei Komponenten des erfindungsgemäßen Fertigdesserts 16, 17 ausgehend von der Mittelachse abwechselnd senkrecht nebeneinander im Becher angeordnet. Der Anteil der beiden Komponenten A 16 und Komponente B 17 an der Oberfläche des Fertigdesserts ist im wesentlichen gleich. Der Anteil der Komponente A 16 nimmt mit abnehmender Füllhöhe kontinuierlich ab, wohingegen der Anteil an Komponente B 17 mit abnehmender Füllhöhe kontinuierlich zunimmt, so dass insgesamt auf das gesamte Bechervolumen gesehen der Anteil an Komponente A 16 ca. 35 Vol-% und der Anteil an Komponente B 17 ca. 65 Vol-% beträgt.

### Beispiele

Fertigdessert 1, nicht gedreht:

Bei der aufzuschäumenden Komponente 16 handelt es sich um Auflegsahne (20 % Fett), die nach dem Flussschema in Figur 1 zunächst in der Aufschlagmaschine 5 aufgeschäumt und anschließend in den Vorlaufbehälter 6 gepumpt wird. Bei der ungeschäumten Komponente 2 handelt es sich um eine Puddingcreme, die dem Vorratsbehälter 4 entnommen und in den Vorlaufbehälter 7 gepumpt wird. Das Gesamtfüllvolumen des Bechers beträgt 125 g, wovon 65 Vol% auf die Puddingcreme entfallen und 35 Vol-% auf die geschlagene Sahne. Die beiden Komponenten werden abgefüllt, wobei mit zunehmender Füllhöhe der Anteil der Puddingcreme, gesehen auf die jeweilige Querschnittsfläche des Bechers, kontinuierlich abnimmt, wohingegen der Anteil an geschlagener Sahne aufgrund des Auftriebs kontinuierlich zunimmt, so dass am Ende auf der Oberfläche des Desserts die geschlagene Sahne und die Puddingcreme gleiche Oberflächenanteile aufweisen. Die Zusammensetzung des Fertigdesserts 1 ist Tabelle 1 zu entnehmen.

**Tabelle 1**

| | Gewicht (g) | % Gew. | Volumen (ml) | % Vol. |
|---|---|---|---|---|
| **Fertigdessert 1 Nicht gedreht** | | | | |
| Creme | 100 | 80 | 99 | 65 |
| Geschlagene Sahne | 25 | 20 | 53 | 35 |

## Patentansprüche

1. Gekühltes Fertigdessert in Form eines Milchproduktes in einem Becher mit einem im wesentlichen rundem Querschnitt mit mindestens zwei verschiedenen geformten Komponenten, von denen mindestens eine, vorzugsweise eine, ein Milchprodukt ist, wobei mindestens eine, vorzugsweise eine, aufgeschäumt ist und die Komponenten getrennt voneinander vorliegen und gemeinsame Berührungsflächen haben, die von unten nach oben und über die gesamte Becherhöhe von der Bechermitte bis zur Becherwandung verlaufen und die Komponenten von der Bechermitte zum Umfang eine Verbreiterung aufweisen,
**dadurch gekennzeichnet, dass**
sich der volumenmäßige Anteil der Komponenten, insbesondere die Breite von Sektoren, von unten nach oben gegenläufig verändert, wobei vorzugsweise eine Komponente mit höherer Dichte und insbesondere geringerer Viskosität im unteren Bereich breiter ist als im oberen Bereich.

2. Gekühltes Fertigdessert nach Anspruch 1, **dadurch gekennzeichnet, dass** die Unterschiede der Komponenten mindestens in Viskosität und/oder Dichte und gegebenenfalls im Volumen liegen.

3. Gekühltes Fertigdessert nach einem der vorhergehenden Ansprüche, **dadurch gekennzeichnet, dass** die Komponenten am Außenmantel wendelförmig nach oben verlaufen.

4. Gekühltes Fertigdessert nach einem der vorhergehenden Ansprüche, **dadurch gekennzeichnet, dass** die geschäumte Komponente um 20 bis 160 % aufgeschäumt ist.

5. Gekühltes Fertigdessert nach einem der vorhergehenden Ansprüche, **dadurch gekennzeichnet, dass** die geschäumte Komponente ein Milchprodukt, insbesondere Sahne, wobei das geschäumte Milchprodukt vorzugsweise um 80 bis 160 % aufgeschäumt ist.

6. Gekühltes Fertigdessert nach einem der vorhergehenden Ansprüche, **dadurch gekennzeichnet, dass** die geschäumte Komponente eine Fruchtzubereitung ist, wobei die geschäumte Fruchtzubereitung vorzugsweise um 20 bis 60 % aufgeschäumt ist.

7. Gekühltes Fertigdessert nach einem der vorhergehenden Ansprüche, **dadurch gekennzeichnet, dass** mindestens eine Komponente, vorzugsweise eine Komponente, an der Oberfläche des Becherinhaltes gewölbt ist.

8. Gekühltes Fertigdessert nach einem der vorhergehenden Ansprüche, **dadurch gekennzeichnet, dass** mindestens eine Komponente, insbesondere im Horizontalschnitt, sektorenförmig ausgebildet ist.

9. Gekühltes Fertigdessert nach einem der vorhergehenden Ansprüche, **dadurch gekennzeichnet, dass** zwei verschiedene Komponenten abwechselnd in 4 bis 16, insbesondere 6 bis 12, vorzugsweise 10 spiraligen oder radialen, vorzugsweise sektorenartigen, Streifen vorliegen.

## Claims

1. Cooled ready-to-eat dessert in the form of a dairy product in a cup, said cup having an essentially circular cross-section, including at least two components in differing shape, where at least one, preferably one is a dairy product, at least one, preferably one is frothed, and the components are present in a discrete manner and have common contact areas extending from bottom to top and over the entire height of the cup from the centre of the cup outwards to the cup wall and the components extend to a wider shape from the centre of the cup towards the circumference,
**characterized in that**
the proportions in volume of the components, in particular the width of sectors, are variable from bottom to top in an opposed manner, preferably one component of higher density and in particular lesser viscosity being wider in the lower section than in the upper section.

2. Cooled ready-to-eat dessert according to claim 1, **characterized in that** the differences of the components include at least viscosity and/or density and optionally volume.

3. Cooled ready-to-eat dessert according to any of the preceding claims, **characterized in that** the components run upwards in a helical shape at the outer sheath.

4. Cooled ready-to-eat dessert according to any of the preceding claims, **characterized in that** the frothed component has a froth expansion ratio of 20 to 160 %.

5. Cooled ready-to-eat dessert according to any of the preceding claims, **characterized in that** the frothed component is a dairy product, in particular cream, where the frothed dairy product preferably has a froth expansion ratio of 80 to 160 %.

6. Cooled ready-to-eat dessert according to any of the preceding claims, **characterized in that** the frothed component is a fruit product, where the frothed fruit product preferably has a froth expansion ratio of 20 to 60 %.

7. Cooled ready-to-eat dessert according to any of the preceding claims, **characterized in that** at least one of the components, preferably one component, is domed at the surface of the contents of the cup.

8. Cooled ready-to-eat dessert according to any of the preceding claims, **characterized in that** at least one of the components, in particular in a horizontal section, is arranged in a sector shape.

9. Cooled ready-to-eat dessert according to any of the preceding claims, **characterized in that** two different components are arranged in alternating 4 to 16, in particular 6 to 12, preferably 10 helical or radial, preferably sector-shaped streaks.

## Revendications

1. Dessert prêt à consommer refroidi sous forme de produit laitier dans un pot de section transversale essentiellement circulaire, comprenant au moins deux composants moulés différents, dont au moins un, et de préférence un, est un produit laitier, au moins un, et de préférence un, étant moussé, et les composants se présentant sous forme séparée et ayant des surfaces en contact communes, qui s'étendent de bas en haut et sur toute la hauteur du pot depuis le milieu du pot jusqu'à la paroi du pot et les composants s'élargissant depuis le milieu du pot jusqu'à la périphérie,
**caractérisé en ce que**
la proportion en volume des composants, notamment la largeur des secteurs, varie en sens contraire de bas en haut, et de préférence un composant de plus grande densité et en particulier de plus faible viscosité étant plus large dans la région inférieure que dans la région supérieure.

2. Dessert prêt à consommer refroidi selon la revendication 1, **caractérisé en ce que** les différences des composants se dénotent au moins par la viscosité et/ou la densité et éventuellement par le volume.

3. Dessert prêt à consommer refroidi selon l'une quelconque des revendications précédentes, **caractérisé en ce que** les composants s'étendent au niveau de l'enveloppe extérieure en forme d'hélice vers le haut.

4. Dessert prêt à consommer refroidi selon l'une quelconque des revendications précédentes, **caractérisé en ce que** le composant moussé est moussé à raison de 20 à 160 %.

5. Dessert prêt à consommer refroidi selon l'une quelconque des revendications précédentes, **caractérisé en ce que** le composant moussé est un produit laitier, notamment de la crème, le produit laitier moussé étant de préférence moussé à raison de 80 à 160 %.

6. Dessert prêt à consommer refroidi selon l'une quelconque des revendications précédentes, **caractérisé en ce que** le composant moussé est une préparation à base de fruits, la préparation à base de fruits moussée étant de préférence moussée à raison de 20 à 60 %.

7. Dessert prêt à consommer refroidi selon l'une quelconque des revendications précédentes, **caractérisé en ce qu'**au moins un composant, et de préférence un composant, est courbe à la surface du contenu du pot.

8. Dessert prêt à consommer refroidi selon l'une quelconque des revendications précédentes, **caractérisé en ce qu'**au moins un composant, en particulier en coupe horizontale, est réalisé en forme de secteurs.

9. Dessert prêt à consommer refroidi selon l'une
quelconque des revendications précédentes, **caractérisé en ce que** deux composants différents se présentent en alternance en 4 à 16, notamment 6 à 12, et de préférence 10, rubans en spirale ou radiaux, de préférence en forme de secteurs.
